# EUROPÄISCHE PATENTSCHRIFT

(11) **EP 4 074 956 B1**
(45) Veröffentlichungstag und Bekanntmachung des Hinweises auf die Patenterteilung: **20.11.2024**
(21) Anmeldenummer: 22162723.5
(22) Anmeldetag: 17.03.2022
(51) Int. Cl.: F02K 9/64, F02K 9/97

(54) **TRIEBWERKSKOMPONENTE, RAKETENTRIEBWERK UND VERFAHREN ZUR HERSTELLUNG EINER TRIEBWERKSKOMPONENTE**
ENGINE COMPONENT, ROCKET ENGINE AND METHOD OF MANUFACTURING AN ENGINE COMPONENT
COMPOSANT DE MOTEUR, MOTEUR-FUSÉE ET PROCÉDÉ DE FABRICATION D'UN COMPOSANT DE MOTEUR

(30) Priorität: 13.04.2021 DE 102021109260
(43) Veröffentlichungstag der Anmeldung: 19.10.2022
(73) Patentinhaber: Deutsches Zentrum für Luft- und Raumfahrt e.V., 53227 Bonn (DE)
(72) Erfinder: Artzt, Katia, 74239 Hardthausen (DE); Riccius, Jörg, 74219 Möckmühl (DE); Haubrich, Jan, 74239 Hardthausen (DE); Stark, Ralf, 74219 Möckmühl (DE); Oschwald, Michael, 74074 Heilbronn (DE); Opp, Lukas, 28213 Bremen (DE)
(74) Vertreter: RPK Patentanwälte Reinhardt und Kaufmann Partnerschaft mbB

(56) Entgegenhaltungen:
- EP-A1- 3 255 271
- US-A1- 2002 092 291
- US-A1- 2017 122 258

## Beschreibung

### Stand der Technik

Die Erfindung betrifft eine Triebwerkskomponente, insbesondere Raketenschubkammerwandkomponente für eine Raketenschubkammer eines Raketentriebwerks und/oder eine Düsenerweiterungswand, ein Raketentriebwerk sowie ein Verfahren zur Herstellung einer Triebwerkskomponente.

Eine Raketenschubkammerwandkomponente kann dabei eine der folgenden Komponenten sein: ein Injektorkopf, eine Brennkammerwand, ein konvergenter Abschnitt einer Düsenwand, eine Düsenhalswand, ein divergenter Abschnitt der Düsenwand. Der Injektorkopf, die Brennkammer, der konvergente Abschnitt der Düse, der Düsenhals, der divergente Abschnitt der Düse bilden die Raketenschubkammer.

Im Rahmen der konventionellen Herstellung von Schubkammern für Raketentriebwerke, die für einen Flugeinsatz vorgesehen sind, werden üblicherweise Raketenschubkammerwandkomponenten außer der Düsenerweiterungswand und des Injektorkopfes integral gefertigt. Mittels eines additiven Fertigungsverfahrens wie 3D-Druck ist auch eine integrale Fertigung aller Raketenschubkammerwandkomponenten möglich, falls die Gesamtabmessung der Raketenschubkammer kleiner oder gleich der Bauraumgröße der verfügbaren 3D-Druckmaschine ist.

Ein verbreitetes Verfahren zur Kühlung von Schubkammern und/oder Düsenerweiterungen stellt eine aktive oder auch regenerative Kühlung dar, bei der der gesamte Brennstoff bzw. ein Teil des Brennstoffes oder des Oxidators in der Form einer Fluidkühlung zwischen den doppelwandig gefertigten Brennkammerwandungen hindurchströmt, bevor er eingespritzt wird. Ein weiteres verbreitetes Verfahren zur Kühlung von Düsenerweiterungen ist die Verlustkühlung (dump cooling), bei dem ein kleiner Teil des Brennstoffes in der Form einer Fluidkühlung zwischen den doppelwandig gefertigten Düsenerweiterungswandungen hindurchströmt, bevor er das Triebwerk verlässt. Bei dem Fluid kann es sich dabei entweder um eine Flüssigkeit, ein Gas oder um ein überkritisches Fluid handeln.

Regenerativ gekühlte und verlustgekühlte Raketentriebwerke werden durch konzentrische Anordnung von geeigneten Rotationsparaboloidabschnitten realisiert, z.B. Zylinder-, Konus- bzw. Torusabschnitten, wobei jeweils ein Abschnitt für die innere Wand (auch als "innerer Liner" bekannt) und ein weiterer - mit größerem Radius - für den äußeren Tragmantel der heißgasbeaufschlagten Raketenschubkammerwandkomponente und/oder der heißgasbeaufschlagten Düsenerweiterungswand verwendet wird. Gemäß des aktuellen Stands der Technik wird die Regenerativkühlung und die Verlustkühlung zumeist über Kühlkanäle realisiert.

In Einzelfällen, beispielsweise in der DE 102016212399 A1, wird die Regenerativkühlung und/oder die Verlustkühlung durch 1 bis maximal 12 Kühlkanäle realisiert, in dem Brückenelemente als Abstandshalter zwischen der inneren Wand und dem äußeren Tragmantel dienen. Durch die sehr starke Abhängigkeit sowohl der heißgasseitigen Wärmelast als auch des Radius der Brennkammer, Düse, bzw. Düsenerweiterung von deren Axialkoordinate ist eine Anpassung der Geometrie der Kühlkanäle bzw. der Brückenelemente notwendig.

Bei der Auswahl der Kühlkanalgeometrie bzw. der Brückenelementgeometrie und der Anzahl der Kühlkanäle bzw. der Brückenelemente sowie insbesondere bei der Größenanpassung der Kühlkanäle bzw. der Brückenelemente sowohl an die lokale Brennkammerinnenwandgeometrie als auch an die lokale heißgasseitige Wärmelast sind eine Reihe von teilweise gegenläufig wirkenden Zielgrößen zu beachten.

Aus Triebwerkseffizienzgründen muss der Druckverlust im Kühlkanal mit Brückenelementen bzw. in den Kühlkanälen moderat bleiben.

Aufgrund der folgenden Effekte darf die heißgasseitige Raketenschubkammerwandtemperatur bzw. Düsenerweiterungswandtemperatur, die natürlich in jedem Falle unterhalb der Schmelztemperatur des als innerer Liner eingesetzten Wandmaterials liegen muss, nicht zu hoch werden:
Aufgrund der Temperaturabhängigkeit sowohl der Dehnschwingbreite der durch das Hoch- und Herunterfahren des Triebwerks bedingten zyklischen Deformation des Raketenschubkammerwandmaterials bzw. Düsenerweiterungsmaterials als auch der Strukturparameter des für die Herstellung der Raketenschubkammerwand bzw. der Düsenerweiterungswand genutzten Materialien (thermische Entfestigung) sollte die Wandtemperatur nicht zu hoch werden. Dasselbe gilt aufgrund zusätzlicher, zeitabhängiger Hochtemperatureffekte wie z.B. Kriechen, Blanching, thermische Alterung.

Aufgrund der Differenz zwischen Domdruck im Injektorkopf und Brennkammerdruck, bzw. der Differenz zwischen Kühlkanaldruck und Brennkammerdruck bzw. der Differenz zwischen Kühlkanaldruck und Düseninnendruck bzw. der Differenz zwischen Kühlkanaldruck und Düsenerweiterungsinnendruck darf das Verhältnis von heißgasseitiger Wandstärke der Raketenschubkammerkomponenten bzw. der Düsenerweiterungswand zur Kühlkanalbreite der Raketenschubkammer bzw. der Düsenerweiterung einen gewissen minimalen Wert nicht unterschreiten, da es sonst zu einer erhöhten Strukturdeformation kommen kann, wodurch die Lebensdauer gesenkt wird.

Die Geometriegestaltungsfreiheit ist hierbei von der Herstellungstechnologie abhängig. Konventionelle Herstellungsmethoden sind z.B. das Zusammenfügen von vorgefertigten Röhrchen zu einer Raketenschubkammerwandkomponente und/oder Düsenerweiterungswand, z.B. durch Löten bzw. Schweißen. Weiter sind mechanisches Fräsen bzw. Wasserstrahlschneiden der Raketenschubkammerkühlkanäle und/oder Düsenerweiterungswandkühlkanäle in einen vorab gefertigten Raketenschubkammerwandkomponentenrohling und/oder Düsenerweiterungswandrohling und nachfolgendes Aufbringen des äußeren Mantels z.B. durch galvanische Deposition von Material bzw. Auflöten eines vorab gefertigten Außenmantels gebräuchlich.

Der 3D-Druck von Raketenschubkammerwandkomponenten und/oder Düsenerweiterungswänden ist hinsichtlich der notwendigen Geometrievariationen der Kühlkanäle flexibler als die konventionellen Herstellungsverfahren. Insbesondere pulverbettbasierte Verfahren, wie selektives Laserschmelzen oder selektives Elektronenstrahlschmelzen sind jedoch durch die Bauraumgröße der aktuell verfügbaren 3D-Druckmaschinen begrenzt.

Auch Mischvarianten zwischen konventioneller und additiver Fertigung sind möglich, wie z.B. entweder konventionelle oder additive Fertigung des Raketenschubkammerkomponentenrohlings und/oder des Düsenerweiterungswandrohlings, Wasserstrahlschneiden oder Fräsen der Raketenschubkammerkühlkanäle und/oder Düsenerweiterungswandkühlkanäle in den Rohling, und Aufbringen des äußeren Mantels durch galvanische Materialdeposition oder Laserschweißen oder der Laser Wire Direct Closeout (LWDC)-Methode einer Außenhülle auf die Stege zwischen den Kühlkanälen.

Die US 2017/122258 A1 offenbart eine Brennkammer für einen Flüssigtreibstoffmotor mit einem länglichen, hohlen, rohrförmigen Gehäuse mit einer Innenwand, die eine Verbrennungskammer für den Flüssigtreibstoff und eine Auslassdüse für die Verbrennungsprodukte begrenzt, und einer Außenwand, die beide koaxial zu einer Achse des Gehäuses verlaufen; wobei die Innenwand und die Außenwand in radialer Richtung voneinander beabstandet sind und dazwischen mindestens eine Führungsleitung für ein Kühlfluid begrenzen. Eine Vielzahl von stabförmigen Elementen erstrecken sich in den Führungskanal und bilden ein Gitter zur Störung des Kühlfluids, zur Versteifung des Gehäuses und zur Vergrößerung der Wärmeaustauschfläche; wobei das Gitter Teil eines Körpers ist, der zusammen mit den Innen- und Außenwänden in einem Stück und aus einem einzigen Material hergestellt ist.

### Offenbarung der Erfindung

Die Aufgabe der Erfindung ist es, eine Triebwerkskomponente, insbesondere eine Raketenschubkammerwandkomponente für eine Raketenschubkammer eines Raketentriebwerks zu schaffen, welche kostengünstig herzustellen ist und sowohl den thermischen als auch den mechanischen Belastungen während des Heißlaufs funktionsfähig standhält.

Eine weitere Aufgabe ist es, ein Raketentriebwerk mit einer solchen Triebwerkskomponente zu schaffen.

Eine weitere Aufgabe ist es, ein kostengünstiges Verfahren zur Herstellung einer Triebwerkskomponente, insbesondere einer Raketenschubkammerwandkomponente für eine Raketenschubkammer eines Raketentriebwerks anzugeben.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und den Zeichnungen.

Es wird eine Triebwerkskomponente vorgeschlagen, insbesondere eine Raketenschubkammerwandkomponente und/oder Düsenerweiterungswand für eine Raketenschubkammer und/oder für eine Düsenerweiterung eines Raketentriebwerks, umfassend eine doppelwandige Brennkammer und/oder eine doppelwandige Düsenerweiterung, die in Strömungsrichtung eines Verbrennungsgases durch einen divergenten Abschnitt einer Düse und/oder eine Austrittsebene des Raketentriebwerks begrenzt ist, und die eine innere erste Wand und eine äußere zweite Wand aufweist. Dabei ist wenigstens in einem ersten Abschnitt in einer axialen Richtung zwischen der ersten Wand und der zweiten Wand wenigstens ein erster Kühlungsbereich zur Durchströmung mit einem Kühlmittel vorgesehen.

In dem ersten Kühlungsbereich sind Turbulenzerzeuger zur Erzeugung von Turbulenzen im strömenden Kühlmittel zur erhöhten konvektiven Wärmeabfuhr vorgesehen, welche zumindest mit der ersten Wand und/oder zumindest mit der zweiten Wand und/oder mit Verbindungselementen zwischen der ersten Wand und der zweiten Wand fest verbunden sind.

Erfindungsgemäß sind die Turbulenzerzeuger als Pin-Fins mit bolzenähnlicher Struktur ausgebildet.

In einem zweiten Abschnitt in Strömungsrichtung des Verbrennungsgases vor dem ersten Kühlungsbereich ist wenigstens ein zweiter Kühlungsbereich und/oder in einem dritten Abschnitt in der Strömungsrichtung des Verbrennungsgases nach dem ersten Kühlungsbereich wenigstens ein dritter Kühlungsbereich vorgesehen, welcher zweite und/oder dritte Kühlungsbereich Strömungskanäle aufweist, welche wenigstens mit der ersten Wand in thermischer Verbindung stehen.

Es können mindestens dreizehn solcher Strömungskanäle im zweiten und/oder dritten Kühlungsbereich vorhanden sein.

Es zeigt sich, dass durch diese Kombination verschiedener Kühlgeometrieen in verschiedenen Axialabschnitten der Schubkammer bzw. Düsenerweiterung, nämlich einerseits mindestens dreizehn Strömungskanäle in einem Axialabschnitt oder mehreren Axialabschnitten der Schubkammer bzw. Düsenerweiterung, andererseits ausschließlich Turbulenzerzeuger in einem oder mehreren Axialabschnitten, die sich von den oben genannten Abschnitten mit mindestes dreizehn Strömungskanälen unterscheiden, der Druckverlust im Kühlungsbereich vorteilhaft insgesamt gering gehalten werden kann.

Dabei kann die Zahl der Strömungskanäle in den verschiedenen Abschnitten auch unterschiedlich sein.

Mit besonderem Vorteil sind dabei die Turbulenzerzeuger im ersten Kühlungsbereich in einem ringförmigen Bereich am Außenumfang der ersten und/oder am Innenumfang der zweiten Wand verteilt.

Eine günstige Ausgestaltung weist beispielsweise einen Kühlungsbereich mit mindestens dreizehn nebeneinander liegenden Strömungskanälen, gefolgt von einem ringförmigen Kühlungsbereich mit ausschließlich Turbulenzerzeugern, gefolgt von einem weiteren Kühlungsbereich mit mindestens dreizehn nebeneinander liegenden Strömungskanälen auf.

Die Düse ist beispielsweise eine de-Laval-Düse und umfasst sowohl einen konvergenten Düsenteil als auch den divergenten Düsenteil und ggf. eine Düsenerweiterung. Ein Düsenhals stellt den Übergang vom konvergenten Abschnitt zum divergenten Abschnitt der Düse dar.

Vorteilhaft wird für die Regenerativkühlung und/oder Verlustkühlung von heißgasbeaufschlagten Raketenschubkammerwandkomponenten und/oder Düsenerweiterungswänden die Verwendung von Turbulenzerzeugern vorgeschlagen, welche mit der Heißgaswand als innerer erster Wand und/oder mit dem äußeren Tragmantel der jeweiligen Raketenschubkammerkomponente als äußerer zweiter Wand und/oder mit Verbindungselementen zwischen innerer und äußerer Wand fest verbunden sind. Solche Turbulenzerzeuger sind in Form sogenannter Pin-Fins ausgebildet. Als Pin-Fins werden üblicherweise bolzenähnliche Strukturen bezeichnet. Die Pin-Fins können insbesondere einen Kreisquerschnitt aufweisen. Die Turbulenzerzeuger können anstatt oder zusätzlich zu konventionellen Raketenschubkammerkühlkanälen und/oder Düsenerweiterungskühlkanälen angeordnet sein. Die konventionellen Kühlkanäle können wahlweise mit oder ohne Turbulenzerzeuger mit freien Enden (sogenannten "Turbulatoren") ausgebildet sein.

Die Turbulenzerzeuger dienen der Erzeugung von Turbulenzen im strömenden Kühlmittel zur erhöhten konvektiven Wärmeabfuhr und ermöglichen dadurch eine verbesserte Wärmeübertragung von der mit Heißgas beaufschlagten Brennkammerinnenwand (erste Wand) und/oder Düsenerweiterungswand auf das Kühlmittel.

Sind die Turbulenzerzeuger zwischen erster Wand und zweiter Wand angeordnet, dienen diese als Abstandshalter zwischen den beiden Wänden, um eine ungünstige Reduktion des Kühlmitteldurchströmungsquerschnitts während des Heißlaufs zu vermeiden.

Sind die Turbulenzerzeuger sowohl mit der ersten Wand als auch mit der zweiten Wand verbunden, erfüllen diese zusätzlich die wichtigen Funktionen der Vermeidung eines ungünstigen Beulens der heißgasseitigen Raketenschubkammerwand und/oder Düsenerweiterungswand in das Heißgas hinein als auch der Wärmeleitung zwischen der ersten Wand und der zweiten Wand. So kann - wie bei Kühlrippen - im Feststoff Wärme von der ersten Wand nach außen zur zweiten Wand, bzw. in Richtung der zweiten Wand geleitet werden. Die Wärmeleitungseigenschaften sind, da die Turbulenzerzeuger aus Metall bestehen, sehr gut ausgebildet.

Die als Turbulenzerzeuger eingesetzten Verbindungselemente können demnach je nach Ausbildung bis zu vier unterschiedliche Funktionen erfüllen: Erzeugen von Turbulenzen im als Kühlmittel durchströmenden Fluid sowohl für frei endende Turbulatoren als auch für Wand-zu-Wand-Pin-Fins, und, jeweils nur für Wand-zu-Wand-Pin-Fins, konduktive Wärmeabfuhr von der ersten zur zweiten Wand, Abstützung zwischen erster und zweiter Wand zwecks Vermeidung einer Verringerung des Strömungsquerschnitts des Kühlfluids und Vermeidung des Beulens der ersten Wand in das Heißgas hinein.

Die letztgenannte Funktion erfordert hierbei eine feste Verbindung der Turbulenzerzeuger sowohl mit der ersten als auch mit der zweiten Wand.

Die vorgeschlagene Triebwerkskomponente kann kostengünstig gefertigt werden. Vorteilhaft ist beim späteren Einsatz ein sicherer Betrieb mit einer hinreichend hohen Lebensdauer möglich.

Weiter weist die erfindungsgemäße Ausbildung des Kühlungsbereichs der Triebwerkskomponente bezüglich der Fertigung der Komponente erhebliche wirtschaftliche Vorteile auf im Vergleich zu einer Fertigung des Kühlungsbereichs mit vorgefertigten separaten Röhrchen, die für eine Nutzung in Axialrichtung der Raketenschubkammer vorgesehen sind. Die vorgefertigten Röhrchen müssten zwecks Anpassung an den veränderlichen Schubkammerwandkomponentenradius entweder eine variable Breite oder eine variable Wandstärke (oder beides) aufweisen. Weiter ergeben sich wirtschaftliche Vorteile gegenüber dem Aufteilen einzelner vorgefertigter Röhrchen in mehrere Röhrchen bzw. dem Zusammenführen mehrerer vorgefertigter Röhrchen in einzelne Röhrchen, welches aufgrund des manuellen Anteils der erforderlichen Arbeiten unwirtschaftlich ist.

Ein 3D-Druck dieser variablen Kühlkanalgeometrie mit Turbulenzerzeugern ist unter Beachtung der Bauraumgröße der verfügbaren 3D-Druckmaschinen für Triebwerke mittlerer Größe wirtschaftlich gut darstellbar.

Weiter ergeben sich Vorteile gegenüber der Verwendung vorgefertigter, wie z.B. nahtlos gezogener Röhrchen konstanten Querschnitts, bzw. dem 3D-Druck eines solchen Designs.

Diese würden zur Anpassung an den veränderlichen Radius der Brennkammer, Düse bzw. Düsenerweiterung sowohl einen schrägen Einsatz als auch die kontinuierliche Änderung des Winkels der Röhrchen in Relation zur Axialrichtung der Raketenschubkammer bzw. der Düsenerweiterung erfordern.

Dadurch kann eine Rotation des Heißgases vorteilhaft vermieden werden, welche durch das Ausbeulen von winklig angeordneten Röhrchen bei Röhrchenbauweise, bzw. von 3D-Druck-Komponenten des Röhrchenbauweisen-Designs entstehen könnte, und die durch andere, allesamt antriebseffizienzverringernde, Methoden ausgeglichen werden müsste, z.B. durch Gegensteuern mit Lageregelungstriebwerken, Schubvektoränderung der Booster eines Launchers bzw. die Verwendung interner Leitbleche in der Düsenerweiterung für das in der Brennkammer erzeugte Heißgas.

Nach einer günstigen Ausgestaltung der Triebwerkskomponente können die Turbulenzerzeuger in dem ersten Kühlungsbereich als Wand-zu-Wand-Pin-Fins ausgebildet sein. Insbesondere durch ein additives Fertigungsverfahren können die Turbulenzerzeuger einfach gefertigt werden. Die Wand-zu-Wand-Pin-Fins können vorteilhaft zwischen erster und zweiter Wand der Brennkammer und/oder der Düsenerweiterung angeordnet und mit dieser verbunden sein.

Nach einer günstigen Ausgestaltung der Triebwerkskomponente können in den Strömungskanälen wenigstens bereichsweise zusätzliche Turbulenzerzeuger, insbesondere frei endende Turbulenzerzeuger (Turbulatoren), angeordnet sein: Die Wirkung der Strömungskanäle als Kühlkanäle kann zusätzlich durch die Erzeugung von Turbulenzen im Kühlmittel in den Strömungskanälen noch verstärkt werden.

Nach einer günstigen Ausgestaltung der Triebwerkskomponente können die Strömungskanäle so ausgelegt sein, dass ein strömungslängenbezogener Druckverlust des Kühlmittels in den Strömungskanälen im zweiten und/oder dritten Kühlungsbereich deutlich geringer ist als im ersten Kühlungsbereich, in dem ausschließlich Turbulenzerzeuger angeordnet sind.

Im Gegensatz zu einer bei einer konventionellen Kühlkanalauslegung mit schräg gestellten Röhrchen nötigen vergrößerten Strömungslänge des Kühlmittels ergibt sich durch die erfindungsgemäße Lösung jedoch eine Verringerung des Druckverlustes im Kühlkanal.

Nach einer günstigen Ausgestaltung der Triebwerkskomponente kann der erste Kühlungsbereich in dem Abschnitt oder in den Abschnitten mit hoher thermischer Belastung, also insbesondere in dem in Strömungsrichtung des Verbrennungsgases konvergenten Abschnitt der Düse und dem Düsenhals und/oder des Transitionsbereichs einer Dual-Bell-Düsenerweiterung, angeordnet sein. Dieser Abschnitt der Düse und/oder der Düsenerweiterung stellt einen besonders hoher Wärmelast ausgesetzten Bereich (bzw. stellen besonders hohen Wärmelasten ausgesetzte Bereiche) der Triebwerkskomponente dar und kann bzw. können mit der erfindungsgemäßen Lösung wirkungsvoll gekühlt werden.

Nach einer günstigen Ausgestaltung der Triebwerkskomponente können die Strömungskanäle in einem zylinderförmigen Abschnitt und/oder einem in Strömungsrichtung eines Verbrennungsgases divergenten Abschnitt der Düse angeordnet sein.

Nach einer weiteren günstigen Ausgestaltung der Triebwerkskomponente können die Strömungskanäle in einem Abschnitt stromaufwärts eines Transitionsbereiches einer Dual-Bell-Düse und/oder in einem Abschnitt stromabwärts des Transitionsbereiches einer Dual-Bell-Düse angeordnet sein.

Im zylinderförmigen Raketenbrennkammerwandabschnitt, bzw. von Raketenschubkammerabschnitten mit viel geringerer heißgasseitiger Thermallast, wie z.B. dem divergenten Abschnitt der Düse und/oder in den Abschnitten außerhalb des Transitionsbereiches einer Dual-Bell-Düsenerweiterung können zusätzlich zu oder anstatt der Turbulenzerzeuger in den thermischen Maximalbelastungsbereichen der Raketenschubkammer konventionelle Kühlkanäle eingesetzt werden, um den lokalen Druckverlust im Kühlsystem auf ein Minimum zu reduzieren.

Nach einer günstigen Ausgestaltung der Triebwerkskomponente können die in axialer Richtung aufeinanderfolgenden Turbulenzerzeuger in einer Umfangsrichtung jeweils an derselben Winkelposition angeordnet sein.

Nach einer alternativen günstigen Ausgestaltung der Triebwerkskomponente kann ein in axialer Richtung folgender Turbulenzerzeuger in Umfangsrichtung jeweils winkelmittig zu jeweils zwei in axialer Richtung davor oder dahinter liegenden Turbulenzerzeugern angeordnet sein.

Nach einer weiteren alternativen günstigen Ausgestaltung der Triebwerkskomponente können eine Anzahl von Turbulenzerzeugern in Querschnitten des Kühlungsbereichs, die in axialer Richtung aufeinander folgen, einem ganzzahligen Verhältnis entsprechen. Insbesondere kann eine Anzahl von Turbulenzerzeugern in Querschnitten, die in axialer Richtung aufeinander folgen, identisch sein.

Mittels einer symmetrischen Anordnung der Turbulenzerzeuger, wie z.B. entweder alle in Axialrichtung aufeinander folgenden Turbulenzerzeuger an derselben Umfangsrichtungswinkelposition oder alternativ mittig versetzt positionierte Turbulenzerzeuger, wenn ein Turbulenzerzeuger der folgenden axialen Position sich an der gemittelten Umfangsrichtungswinkelposition der beiden Turbulenzerzeuger der vorherigen Turbulenzerzeuger-Axialposition befindet, kann zudem eine effizienzverringernde Rotation des Heißgases durch z.B. kriechbedingtes Ausbeulen von Wandligamenten zwischen den Turbulenzerzeugern vermieden werden, wobei ein Wandligament dabei einen lichten Bereich der ersten Wand zwischen den Turbulenzerzeugern darstellt. Eine notwendige Voraussetzung hierfür ist die Verwendung ganzzahliger Verhältnisse der Anzahl der Turbulenzerzeuger in aufeinanderfolgenden Raketenschubkammerquerschnitten, mit dem Spezialfall einer identischen Anzahl von Turbulenzerzeugern in allen Querschnitten der Raketenschubkam merwand.

Nach einer günstigen Ausgestaltung der Triebwerkskomponente kann ein Abstand in Umfangsrichtung und/oder axialer Richtung zwischen benachbarten Turbulenzerzeugern abhängig von einer Thermalbelastung der ersten Wand in bestimmungsgemäßem Betrieb vorgesehen sein. Insbesondere kann der Abstand zwischen benachbarten Turbulenzerzeugern in Bereichen mit einer höheren Thermalbelastung der ersten Wand in bestimmungsgemäßem Betrieb kleiner als der Abstand zwischen benachbarten Turbulenzerzeugern mit einer niedrigeren Thermalbelastung der ersten Wand in bestimmungsgemäßem Betrieb vorgesehen sein. Der Abstand zwischen benachbarten Turbulenzerzeugern ist dabei als lichter Abstand zu verstehen.

Nach einer günstigen Ausgestaltung der Triebwerkskomponente kann die Höhe der Turbulenzerzeuger variierend ausgebildet sein: Günstigerweise wird die Höhe der Turbulenzerzeuger so gewählt, dass in einem thermisch hoch belasteten Bereich die Höhe der Turbulenzerzeuger kleiner ist als die Höhe der Turbulenzerzeuger in einem thermisch geringer belasteten Bereich. Dadurch kann eine Vergleichmäßigung der Wandtemperatur und eine bessere Kühlwirkung im Betrieb der Brennkammer erreicht werden.

Nach einer günstigen Ausgestaltung der Triebwerkskomponente können die Turbulenzerzeuger einen mit einem Radius der Brennkammer und/oder der Düsenerweiterung variierenden Abstand aufweisen. Dadurch kann eine Vergleichmäßigung der mechanischen Belastung der Brennkammerinnenwand (erste Wand) erreicht werden.

Nach einer günstigen Ausgestaltung der Triebwerkskomponente können die heißgasseitigen Wandligamente zwischen den Turbulenzerzeugern eine mit dem Radius der Brennkammer und/oder Düsenerweiterung variierende Wandstärke aufweisen. Dadurch kann eine Vergleichmäßigung der mechanischen Belastung der Brennkammerinnenwand (erste Wand) erreicht werden.

Nach einer günstigen Ausgestaltung der Triebwerkskomponente können die Turbulenzerzeuger einen mit dem Radius der Brennkammer und/oder der Düsenerweiterung variierenden Durchmesser aufweisen. Dadurch kann eine Vergleichmäßigung der mechanischen Belastung der Brennkammerinnenwand (erste Wand) bzw. der Düsenerweiterungsinnenwand erreicht werden.

Mittels geeigneter Variation von Durchmesser, Abstand und Höhe der Turbulenzerzeuger, wobei die Höhe der Turbulenzerzeuger dem Abstand zwischen dem inneren Liner als innerer erster Wand sowie dem äußeren Tragmantel als äußerer zweiter Wand der Triebwerkskomponente entspricht, einer geeigneten Variation der Wandstärke der ersten Wand sowie gegebenenfalls auch eine Kombination mit konventionellen Kühlkanälen, mit oder ohne frei endenden Turbulenzerzeugern (Turbulatoren) kann eine Minimierung der maximalen Heißgaswandtemperatur bei gleichzeitiger Minimierung des Druckverlustes im Kühlsystem sowie Minimierung der mechanischen Belastung der Brennkammerinnenwand (erste Wand) bzw. der Düsenerweiterungsinnenwand erreicht werden.

In den Bereichen der heißgasseitigen Maximalbelastungspositionen der Triebwerkskomponente wie z.B. dem Düsenhals bzw. einem Transitionsbereich einer Dual-Bell-Düsenerweiterung mit zwei verschieden divergenten Abschnitten können hierbei zum Erreichen der maximalen Kühlwirkung sowohl die Abstände zwischen den Turbulenzerzeugern als auch die Höhe der Turbulenzerzeuger als auch die Wandstärke der ersten Wand sehr klein gewählt werden.

In den Axialpositionen der Triebwerkskomponente mit etwas geringerer heißgasseitiger Thermallast kann sowohl der Abstand als auch die Höhe der Turbulenzerzeuger als auch die Wandstärke der ersten Wand größer gewählt werden, um sowohl den lokalen Druckverlust im Regenerativ- bzw. Verlustkühlsystem zu verringern als auch die mechanische Belastung der Brennkammerwand zu minimieren.

Nach einer günstigen Ausgestaltung der Triebwerkskomponente können die Turbulenzerzeuger einen Querschnitt umfassend einen, insbesondere bionischen, Freiformquerschnitt und/oder einen kreisförmigen Querschnitt und/oder einen ellipsenförmigen Querschnitt und/oder einen polygonförmigen Querschnitt, und/oder einen rechteckförmigen Querschnitt und/oder einen quadratischen Querschnitt aufweisen. Dadurch können günstige Variationen der Turbulenzerzeugung des Kühlmittels erreicht werden. Die Turbulenzerzeuger können einen gleichartigen Querschnitt aufweisen oder mit unterschiedlichen Querschnittsformen ausgebildet sein.

Nach einer günstigen Ausgestaltung der Triebwerkskomponente können die Turbulenzerzeuger einen über die Höhe der Turbulenzerzeuger veränderlichen Querschnitt aufweisen. Besonders vorteilhaft kann so auch ein bionisches Design mit über die Höhe des Turbulenzerzeugers veränderlichem Querschnitt eingesetzt werden. Dadurch können günstige Variationen der Turbulenzerzeugung des Kühlmittels erreicht werden.

Nach einer günstigen Ausgestaltung kann die Triebwerkskomponente einstückig ausgebildet sein. Auf diese Weise kann die Triebwerkskomponente besonders kostengünstig gefertigt werden. Auch komplexere Ausgestaltungen der Turbulenzerzeuger lassen sich so günstig realisieren. Die Verbindung zwischen innerer erster Wand und äußerer zweiter Wand der Triebwerkskomponente kann so über die Turbulenzerzeuger auf geeignete und wirtschaftliche Weise erreicht werden.

Nach einer günstigen Ausgestaltung kann die Triebwerkskomponente mittels eines additiven Fertigungsverfahrens gefertigt sein. Unterschiedliche additive, im Folgenden auch als 3D-Druck bezeichnete Herstellungsverfahren können dazu verwendet werden.

Pulverbasierte Verfahren für metallische Materialien können umfassen: Selektives Laserschmelzen (Selective Laser Melting (SLM), auch bezeichnet als Laser Powder Bed Fusion (L-PBF)), Selektives Elektronenstrahlschmelzen (Selective Electron Beam Melting (SEBM)), Laserauftragsschweißen (Laser Metal Deposition - Powder (LMD-P), auch bezeichnet als Laser Engineered Net Shaping (LENS); auch bezeichnet als Blown Powder Directed Energy Deposition (DED)), in Spezialfällen auch Thermisches Spritzen (Thermal Spraying) mit den Unterformen Vacuum Plasma Spraying (VPS); High Velocity Oxygen Fuel (HVOF) spraying, High Velocity Air Fuel (HVAF) spraying, Warm Spraying oder auch Kaltgasspritzen (Cold Gas Spraying / CGS).

Drahtbasierte additive Fertigungsverfahren für metallische Materialien können umfassen: Laserauftragsschweißen, Laser Wire Direct Closeout (LWDC) speziell für das Verschließen von Kühlkanälen, Electron Beam Free Form Fabrication (EBFFF), Wire Arc Deposition, auch bezeichnet als: Wire Feed Plasma Arc, auch bezeichnet als Arc Based Wire Directed Energy Deposition (DED).

Nach einem weiteren Aspekt der Erfindung wird ein Raketentriebwerk vorgeschlagen, in welchem wenigstens eine Raketenschubkammer und/oder eine Düsenerweiterung angeordnet ist.

Vorteilhaft wird für eine Regenerativ- bzw. Verlustkühlung von heißgasbeaufschlagten Raketenschubkammerwandkomponenten und/oder einer Düsenerweiterungswand des erfindungsgemäßen Raketentriebwerks die Verwendung von Turbulenzerzeugern vorgeschlagen, welche mit der Heißgaswand als innerer erster Wand und/oder mit dem äußeren Tragmantel der jeweiligen Raketenschubkammerkomponente als äußerer zweiter Wand und/oder mit Verbindungselementen zwischen erster und zweiter Wand fest verbunden sind.

Solche Turbulenzerzeuger sind in Form sogenannter Pin-Fins ausgebildet. Die Pin-Fins können insbesondere einen Kreisquerschnitt aufweisen. In jedem Axialabschnitt der Raketenschubkammer und/oder Düsenerweiterung können die Turbulenzerzeuger anstatt oder zusätzlich zu konventionellen Raketenschubkammerkühlkanälen angeordnet sein. Die konventionellen Kühlkanäle können wahlweise mit oder ohne frei endende Turbulenzerzeuger (Turbulatoren) ausgebildet sein.

Die erfindungsgemäße Ausbildung des Kühlungsbereichs der Triebwerkskomponente weist bezüglich einer Fertigung der Komponente erhebliche wirtschaftliche Vorteile auf im Vergleich zu einer Fertigung von vorgefertigten separaten Röhrchen, die für eine Nutzung in Axialrichtung der Raketenschubkammer vorgesehen sind. Die vorgefertigten Röhrchen müssten dadurch zur Anpassung an den veränderlichen Schubkammerwandkomponentenradius und/oder Düsenerweiterungswandradius entweder eine variable Breite oder eine variable Wandstärke (oder beides) aufweisen. Weiter ergeben sich wirtschaftliche Vorteile gegenüber dem Aufteilen einzelner vorgefertigter Röhrchen in mehrere Röhrchen bzw. dem Zusammenführen mehrerer vorgefertigten Röhrchen in einzelne Röhrchen, welches aufgrund des manuellen Anteils der erforderlichen Arbeiten unwirtschaftlich ist.

Nach einem weiteren Aspekt der Erfindung wird ein Verfahren zur Herstellung einer Triebwerkskomponente vorgeschlagen, insbesondere einer Raketenschubkammerwandkomponente und/oder einer Düsenerweiterungskomponente für eine Raketenschubkammer und/oder für eine Düsenerweiterung eines Raketentriebwerks, mit einer doppelwandigen, mit Heißgas beaufschlagten Brennkammer und/oder Düsenerweiterung, die in Strömungsrichtung eines Verbrennungsgases durch einen divergenten Abschnitt einer Düse und/oder die Austrittsebene des Heißgases begrenzt ist, und die eine erste Wand und eine zweite Wand aufweist.

Dabei ist zwischen der ersten Wand und der zweiten Wand wenigstens ein erster Kühlungsbereich zur Durchströmung mit einem Kühlmittel vorgesehen.

In dem ersten Kühlungsbereich werden Turbulenzerzeuger angeordnet, welche mit der ersten Wand und/oder der zweiten Wand und/oder mit Verbindungselementen zwischen erster und zweiter Wand verbunden sind und welche im strömenden Kühlmittel Turbulenzen zur erhöhten konvektiven Wärmeabfuhr erzeugen.

Es ist in Strömungsrichtung des Verbrennungsgases vor dem ersten Kühlungsbereich ein zweiter Kühlungsbereich und/oder nach dem ersten Kühlungsbereich ein dritter Kühlungsbereich vorgesehen, welcher zweite und/oder dritte Kühlungsbereich Strömungskanäle aufweist.

Erfindungsgemäß werden die Turbulenzerzeuger als Pin-Fins mit bolzenähnlicher Struktur ausgebildet.

Der zweite und/oder dritte Kühlungsbereich kann Strömungskanäle aufweisen, welche wenigstens mit der ersten Wand in thermischer Verbindung stehen. Konventionelle Strömungskanäle in axialer Richtung der Triebwerkskomponente können die Zuführung des Kühlmittels, insbesondere des Treibstoffs des Raketentriebwerks, auf effiziente Weise ermöglichen und so zu einer noch effizienteren Kühlung beitragen.

Vorteilhaft kann ein Abschnitt oder mehrere Abschnitte der Triebwerkskomponente oder die gesamte Triebwerkskomponente mit dem ersten Kühlungsbereich beispielsweise mittels eines additiven Fertigungsverfahrens gefertigt werden.

### Zeichnung

Weitere Vorteile ergeben sich aus der folgenden Zeichnungsbeschreibung. In den Figuren sind Ausführungsbeispiele der Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine Triebwerkskomponente nach einem Ausführungsbeispiel der Erfindung in einer teilgeschnittenen isometrischen Ansicht;
- Fig. 2: einen Längsschnitt der Triebwerkskomponente nach Figur 1;
- Fig. 3: einen vergrößerten Ausschnitt eines ersten Kühlungsbereichs der Triebwerkskomponente nach Figur 1;
- Fig. 4: eine berechnete heißgasseitige Wandtemperatur der Brennkammer in Abhängigkeit der Axialrichtung der Triebwerkskomponente nach Figur 1;
- Fig. 5: eine schematische Darstellung eines Raketentriebwerks mit konventioneller Düsenerweiterung nach einem Ausführungsbeispiel der Erfindung;
- Fig. 6: eine schematische Darstellung eines Raketentriebwerks mit Dual-Bell-Düsenerweiterung nach einem Ausführungsbeispiel der Erfindung;
- Fig. 7: eine Höhenforschungsrakete mit einem Raketentriebwerk nach einem Ausführungsbeispiel der Erfindung in einer Hauptstufe;
- Fig. 8: eine Rakete für kleinere Nutzlasten mit einem Raketentriebwerk nach einem Ausführungsbeispiel der Erfindung in der Oberstufe;
- Fig. 9: eine Rakete für große Nutzlasten mit einem Raketentriebwerk nach einem Ausführungsbeispiel der Erfindung als Apogäumstriebwerk;
- Fig. 10: eine Raumflugkapsel mit Raketentriebwerken nach einem Ausführungsbeispiel der Erfindung;
- Fig. 11: ein Landesystem mit einem Raketentriebwerk nach einem Ausführungsbeispiel der Erfindung; und
- Fig. 12: ein Lageregelungssystem mit Raketentriebwerken nach einem Ausführungsbeispiel der Erfindung.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

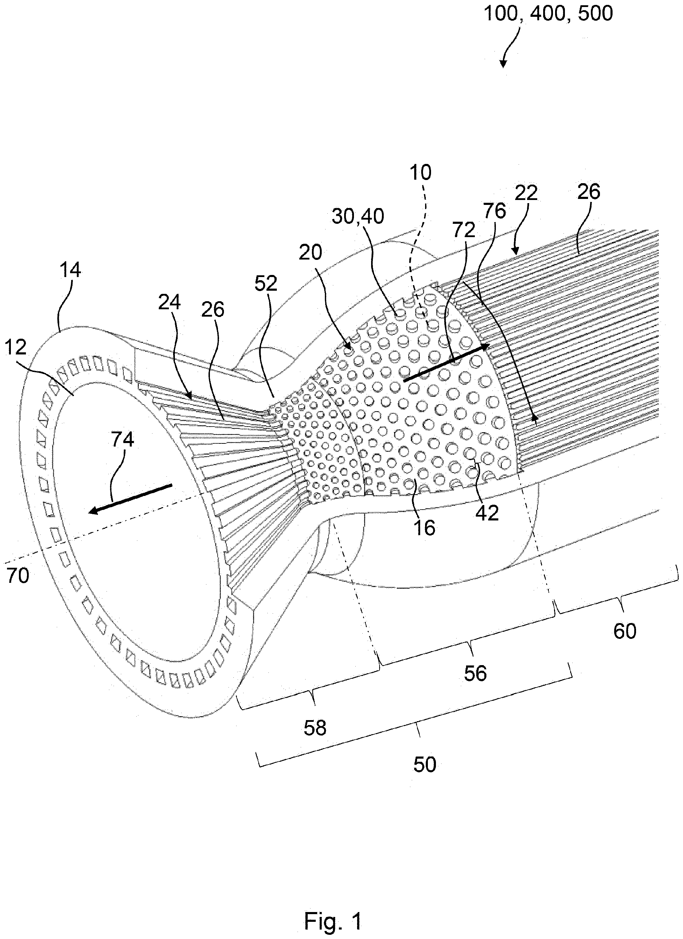

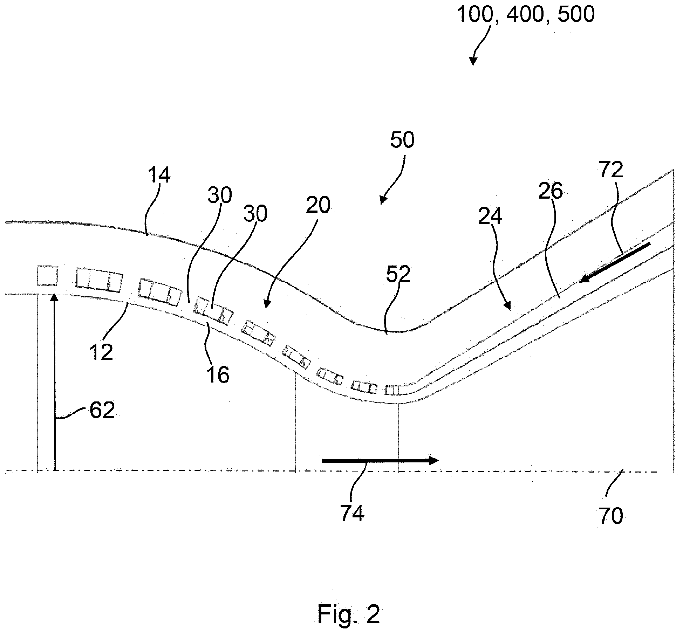

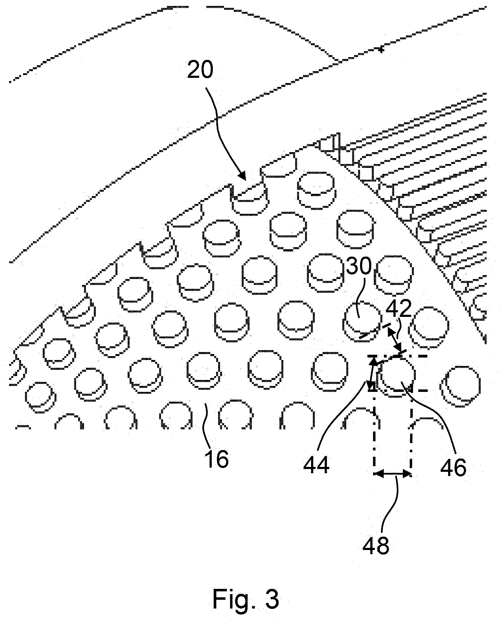

Figur 1 zeigt eine Triebwerkskomponente 100 nach einem Ausführungsbeispiel der Erfindung in einer teilgeschnittenen isometrischen Ansicht. Figur 2 zeigt einen Längsschnitt der Triebwerkskomponente 100 nach Figur 1, während in Figur 3 ein vergrößerter Ausschnitt des ersten Kühlungsbereichs 20 der Triebwerkskomponente 100 nach Figur 1 dargestellt ist.

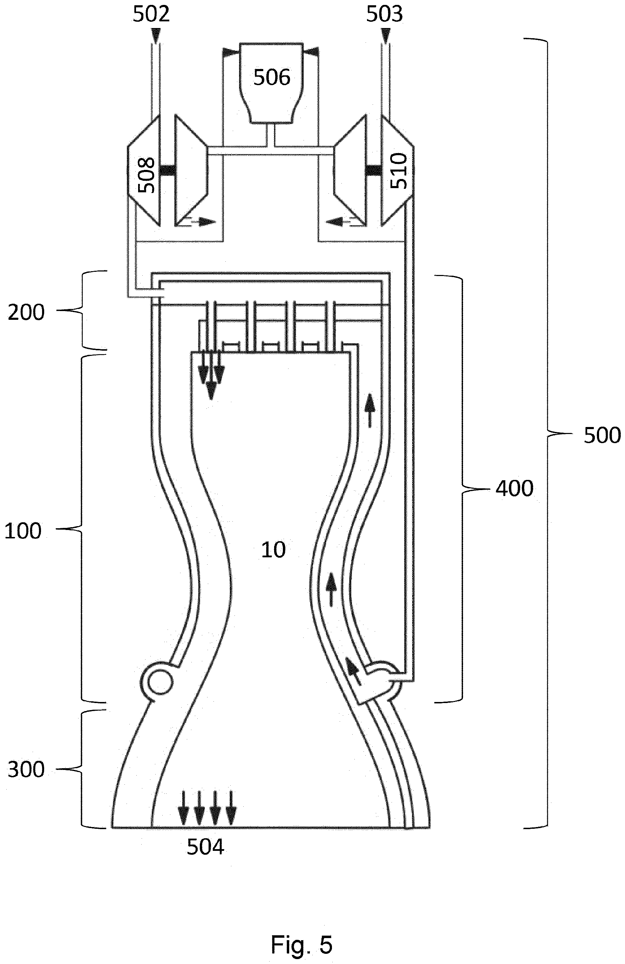

Die Triebwerkskomponente 100, welche insbesondere als Raketenschubkammerwandkomponente für eine Raketenschubkammer 400, wie in den Figuren 5, 6, 7, 8 und 9 dargestellt, eines Raketentriebwerks 500, wie in den Figuren 5, 6 und 7 dargestellt, vorgesehen werden kann, umfasst eine doppelwandige Brennkammer 10, die in Strömungsrichtung 74 eines Verbrennungsgases durch einen divergenten Abschnitt 58 einer Düse 50 begrenzt ist. Die Düse 50 umfasst einen konvergenten Abschnitt 56, einen Düsenhals 52 und den divergenten Abschnitt 58.

Die Brennkammer 10 weist eine innere erste Wand 12 und eine äußere zweite Wand 14 auf, wobei in einem ersten Abschnitt 56 in einer axialen Richtung 70 zwischen der ersten Wand 12 und der zweiten Wand 14 wenigstens ein erster Kühlungsbereich 20 zur Durchströmung mit einem Kühlmittel vorgesehen ist. In dem ersten Kühlungsbereich 20 sind zur Erzeugung von Turbulenzen Verbindungselemente in Form von Turbulenzerzeugern 30 im Kühlmittel vorgesehen, welche fest mit der ersten Wand 12 und mit der zweiten Wand 14 verbunden sind. Die Turbulenzerzeuger 30 in dem ersten Kühlungsbereich 20 sind dabei in der Form von Wand-zu-Wand-Pin-Fins 40 ausgebildet.

Die Wand-zu-Wand-Pin-Fins 40 dienen dabei ebenso als Abstandshalter als auch als Verbindungselemente zwischen den Wänden 12, 14, zur Vermeidung des Beulens der Wand 12 in das Verbrennungsgas hinein als auch zur Wärmeabfuhr von der ersten Wand 12 zur zweiten Wand 14.

Aus Gründen der Übersichtlichkeit ist jeweils nur ein Turbulenzerzeuger 30 mit einem Bezugszeichen bezeichnet. In dem Längsschnitt in Figur 2 sind die Turbulenzerzeuger 30 teilweise von der Seite zu sehen, teilweise sind die Turbulenzerzeuger 30 auch jeweils angeschnitten zu erkennen.

Die Turbulenzerzeuger 30, welche bevorzugt als Pin-Fins 40 ausgebildet sein können, dienen der Erzeugung von Turbulenzen im strömenden Kühlmittel zur erhöhten Wärmeabfuhr.

In einem zweiten Abschnitt 60 in Strömungsrichtung 74 des Verbrennungsgases vor dem ersten Kühlungsbereich 20 ist ein zweiter Kühlungsbereich 22 und in einem dritten Abschnitt 58 in der Strömungsrichtung 74 des Verbrennungsgases nach dem ersten Kühlungsbereich 20 ein dritter Kühlungsbereich 24 vorgesehen, welcher zweite und dritte Kühlungsbereich 22, 24 Strömungskanäle 26 aufweist, welche mit der ersten Wand 12 und der zweiten Wand 14 in struktureller, insbesondere stoffschlüssiger, Verbindung stehen. In der dargestellten Ausführung sind im zweiten und im dritten Kühlungsbereich 22, 24 zahlreiche konventionelle Strömungskanäle 26 eng benachbart zueinander ausgebildet. Der erste Kühlungsbereich 20 weist dagegen keine Strömungskanäle 26, sondern ausschließlich Turbulenzerzeuger 30 auf.

Der erste Kühlungsbereich 20 ist bei dem in Figur 1 dargestellten Ausführungsbeispiel im Bereich der Düse 50, insbesondere in dem in Strömungsrichtung 74 des Verbrennungsgases konvergenten Abschnitt 56 der Düse 50, angeordnet.

Die Strömungskanäle 26 sind in dem zylinderförmigen Abschnitt 60 und dem in Strömungsrichtung 74 des Verbrennungsgases divergenten Abschnitt 58 der Düse 50 angeordnet.

Bei der in Figur 1 dargestellten Triebwerkskomponente 100 handelt es sich um einen ausgewählten Raketenschubkammerwandabschnitt, welcher als integral gefertigtes Bauteil realisiert ist, das sowohl den Abschnitt 60 der zylinderförmigen Brennkammerwand, den konvergenten Düsenabschnitt 56, den Düsenhals 52 wie auch den divergenten Düsenabschnitt 58 bis zu einem Expansionsverhältnis von fünf umfasst.

Beispielhafte Abmessungen für die dargestellte Triebwerkskomponente 100 können wie folgt sein: Brennkammerdurchmesser: 50 mm, Düsenhalsdurchmesser: 25 mm, minimale heißgasseitige Wandstärke:
1 mm. Im Ausführungsbeispiel ist eine Verwendung von Turbulenzerzeugern 30 in Kreisquerschnittform ausschließlich im konvergenten Abschnitt 56 der Düse 50 vorgesehen. Die Anzahl der Turbulenzerzeuger 30 in jedem Querschnitt des konvergenten Abschnitts 56 der Düse 50 orthogonal zur Strömungsrichtung 74 beträgt in diesem Ausführungsbeispiel vierzig. Details der Anordnung der Turbulenzerzeuger 30 sind in der vergrößerten Darstellung in Figur 3 zu erkennen. Es ist eine versetzte Anordnung der Turbulenzerzeuger 30 in aufeinanderfolgenden Axialpositionen vorgesehen, d.h. in jeder zweiten Axialposition eines Turbulenzerzeugers 30 befinden sich die Turbulenzerzeuger 30 an denselben Umfangsrichtungswinkelpositionen.

Ein minimaler lichter Abstand 42 zwischen den Turbulenzerzeugern 30 beträgt beispielsweise 1 mm, ein minimaler Durchmesser 48 eines Turbulenzerzeugers 30 beträgt beispielsweise 1 mm, eine minimale Höhe 44 der Turbulenzerzeuger 30 beträgt beispielsweise 1 mm, eine maximale Höhe der Turbulenzerzeuger 30 beträgt beispielsweise 2 mm.

Das Ausführungsbeispiel zeigt eine Kombination der Turbulenzerzeuger 30 mit konventionellen Strömungskanälen 26. Im zylinderförmigen Abschnitt 60 der Brennkammer 10 des Ausführungsbeispiels sind achtzig konventionelle Strömungskanäle 26 realisiert. Eine Breite der konventionellen Strömungskanäle 26 beträgt im zylinderförmigen Abschnitt 60 beispielsweise konstant 1 mm, eine Breite der Stege zwischen den konventionellen Strömungskanälen 26 im zylinderförmigen Abschnitt 60 konstant beispielsweise 1°mm, eine minimale Höhe der konventionellen Strömungskanäle 26 im zylinderförmigen Abschnitt 60 beispielsweise 1°mm, eine maximale Höhe der konventionellen Strömungskanäle 26 im zylinderförmigen Abschnitt 60 beispielsweise 2 mm.

Im divergenten Abschnitt 58 der Düse 50 sind im Ausführungsbeispiel vierzig konventionelle Strömungskanäle 26 angeordnet. Eine minimale Breite der konventionellen Strömungskanäle 26 beträgt im divergenten Abschnitt 58 beispielsweise 1 mm. eine maximale Breite der konventionellen Strömungskanäle 26 beträgt im divergenten Abschnitt 58 beispielsweise 2,24 mm, eine minimale Höhe der konventionellen Strömungskanäle 26 beträgt im divergenten Abschnitt 58 beispielsweise 1 mm, eine maximale Höhe der konventionellen Strömungskanäle 26 beträgt im divergenten Abschnitt 58 beispielsweise 2,24 mm, eine minimale heißgasseitige Wandstärke beträgt im divergenten Abschnitt 58 beispielsweise 1 mm.

Eine maximale heißgasseitige Wandstärke beträgt im divergenten Abschnitt 58 beispielsweise 2,24 mm, eine minimale Breite der Stege zwischen den konventionellen Strömungskanälen 26 beträgt im divergenten Abschnitt 58 beispielsweise 1 mm, eine maximale Breite der Stege zwischen den konventionellen Strömungskanälen 26 beträgt im divergenten Abschnitt 58 beispielsweise 2,24 mm.

In dem isometrischen Modell des Ausführungsbeispiels der Erfindung in Figur 1 sind zwei Längsschnitte sowie ein Radialschnitt, letzterer bei einem Höhenniveau der Wand-zu-Wand-Pin-Fins 40 und Strömungskanäle 26 von beispielsweise 1 mm, zur Visualisierung der innenliegenden Kühlstrukturen vorgenommen. Im zylinderförmigen Abschnitt 60 der Brennkammer 10 sind bei dem in Figur 1 dargestellten Ausführungsbeispiel achtzig konventionelle Strömungskanäle 26, im konvergenten Abschnitt 56 der Düse 50 sind sechshundert Wand-zu-Wand-Pin-Fins 40 und im divergenten Abschnitt 58 der Düse 50 sind weitere vierzig konventionelle Strömungskanäle 26 angeordnet.

Vorteilhaft können in den Strömungskanälen 26 ebenfalls, wenigstens bereichsweise, Turbulenzerzeuger 30 angeordnet sein.

Die Brennkammer 10 wird im Gegenstrom gekühlt, wie an der eingezeichneten Strömungsrichtung 72 für das Kühlmittel im Vergleich mit der Strömungsrichtung des Verbrennungsgases 74 zu erkennen ist. Das Kühlmittel strömt demzufolge von dem dritten Kühlungsbereich 24 im divergenten Abschnitt 58 der Düse 50 über den Düsenhals 52 zum konvergenten Abschnitt 56 mit dem ersten Kühlbereich 20 mit den Turbulenzerzeugern 30 und von dort zum zweiten Kühlungsbereich 22 im zylindrischen Abschnitt 60 der Triebwerkskomponente 100.

Die Strömungskanäle 26 sind vorteilhaft so ausgelegt, dass ein strömungslängenbezogener Druckverlust des Kühlmittels in den Strömungskanälen 26 im zweiten und/oder dritten Kühlungsbereich 22, 24 deutlich geringer ist als im ersten Kühlungsbereich 20 mit Turbulenzerzeugern 30.

Innenkontur und Außenkontur der Triebwerkskomponente 100 im ersten Kühlungsbereich 20, sowie im zweiten und dritten Kühlungsbereich 22, 24 sind rotationssymmetrisch ausgebildet.

Die in axialer Richtung 70 aufeinanderfolgenden Turbulenzerzeuger 30 sind jeweils versetzt angeordnet, d.h. ein in axialer Richtung 70 folgender Turbulenzerzeuger 30, insbesondere Wand-zu-Wand-Pin-Fin 40, ist in der Umfangsrichtung 76 jeweils an einer gemittelten Winkelposition von jeweils zwei in axialer Richtung 70 davor oder dahinter liegenden Turbulenzerzeugern 30 angeordnet.

In einer alternativen Ausführungsform ist es auch möglich, dass die in axialer Richtung 70 aufeinanderfolgenden Turbulenzerzeuger 30, insbesondere Wand-zu-Wand-Pin-Fins 40, in einer Umfangsrichtung 76 jeweils an derselben Winkelposition angeordnet sind.

Weiter kann in einer weiteren Ausführungsform eine Anzahl von Turbulenzerzeugern 30, insbesondere Pin-Fins 40, in Querschnitten des Kühlungsbereichs 20, die in axialer Richtung aufeinander folgen, einem ganzzahligen Verhältnis entsprechen, insbesondere kann eine Anzahl von Turbulenzerzeugern 30 in Querschnitten, die in axialer Richtung aufeinander folgen, wie im Ausführungsbeispiel, identisch sein.

Ein Abstand 42 in Umfangsrichtung 76 und/oder in axialer Richtung 70 zwischen benachbarten Turbulenzerzeugern 30 (in Figur 3 dargestellt) kann zweckmäßigerweise abhängig von einer Thermalbelastung der ersten Wand 12 in bestimmungsgemäßem Betrieb vorgesehen sein. Insbesondere kann dabei der Abstand 42 zwischen benachbarten Turbulenzerzeugern 30 in Bereichen mit einer höheren Thermalbelastung der ersten Wand 12 in bestimmungsgemäßem Betrieb kleiner als der Abstand der Turbulenzerzeuger 30 in Bereichen mit einer geringeren Thermalbelastung vorgesehen sein.

Mit den folgenden Maßnahmen kann eine Vergleichmäßigung der Wandtemperatur und eine bessere Kühlwirkung im Betrieb der Brennkammer 10 erreicht werden.

Die Turbulenzerzeuger 30 können einen mit der Höhe 44 der Turbulenzerzeuger 30 veränderlichen Querschnitt 46 aufweisen. Dadurch können günstige Variationen der Turbulenzerzeugung des Kühlmittels erreicht werden.

Die Höhe 44 der Turbulenzerzeuger 30 kann variierend ausgebildet sein. Günstigerweise wird die Höhe der Turbulenzerzeuger 30 so gewählt, dass in einem thermisch hoch belasteten Bereich die Höhe 44 der Turbulenzerzeuger 30 kleiner ist als die Höhe 44 der Turbulenzerzeuger 30 in einem thermisch geringer belasteten Bereich.

Die Turbulenzerzeuger 30 können einen mit dem Radius 62 der Brennkammer 10 variierenden Durchmesser 48 aufweisen. Der innere Radius 62 der Triebwerkskomponente 100 ist eine stark veränderliche Funktion der axialen Richtung 70, wie es insbesondere in Figur 2 dargestellt ist.

Die Turbulenzerzeuger 30 können einen mit dem Radius 62 der Brennkammer 10 variierenden Abstand 42 aufweisen.

Heißgasseitige Wandligamente 16 zwischen den Turbulenzerzeugern 30 können eine mit dem Radius 62 der Brennkammer 10 variierende Wandstärke aufweisen.

Außerdem können die Turbulenzerzeuger 30 einen kreisförmigen Querschnitt, einen ellipsenförmigen Querschnitt, oder einen polygonförmigen Querschnitt, insbesondere einen rechteckförmigen Querschnitt, insbesondere einen quadratischen Querschnitt, aufweisen. In einer weiteren Ausführungsform können die Turbulenzerzeuger 30 auch einen über die Höhe 44 der Turbulenzerzeuger 30 veränderlichen Querschnitt 46 aufweisen.

Die Triebwerkskomponente 100 kann einstückig ausgebildet sein, wobei insbesondere ein additives Fertigungsverfahren zur Herstellung eingesetzt werden kann. Insbesondere kann wenigstens ein Abschnitt 56 der Triebwerkskomponente 100 mit dem ersten Kühlungsbereich 20 mittels eines additiven Fertigungsverfahrens gefertigt sein.

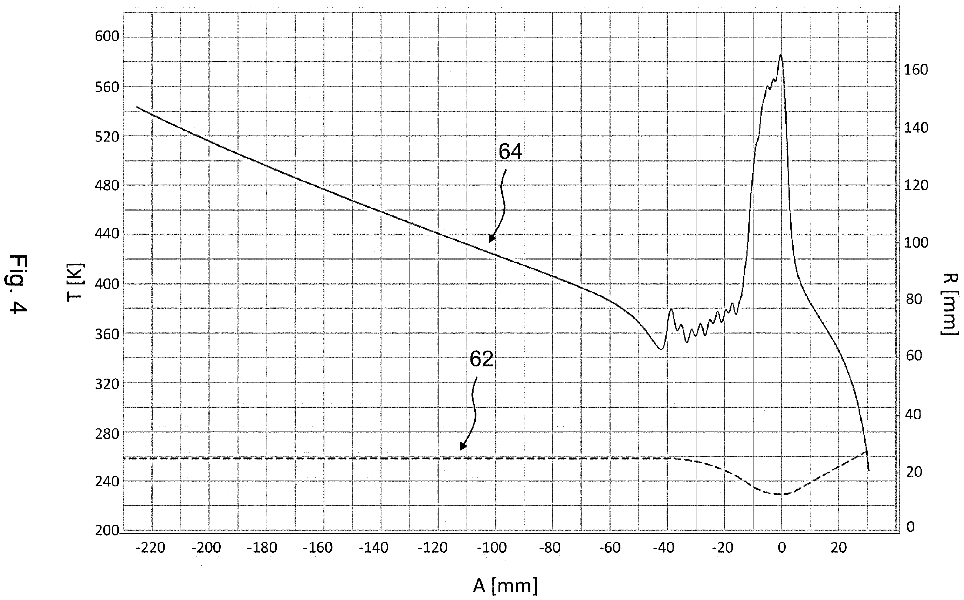

Figur 4 zeigt eine berechnete heißgasseitige Wandtemperatur T 64 in K der Brennkammer in Abhängigkeit von den Axialkoordinaten A in mm der Triebwerkskomponente nach Figur 1. Der Radius R der Triebwerkskomponente ist in mm über den Axialkoordinaten A dargestellt.

Zur gekoppelten numerischen Verifikation der erfindungsgemäßen Ausführung der Triebwerkskomponente wurden die im Folgenden beschriebenen Verfahren angewendet.

Es wurde eine 1d-Analyse der Reaktionskinetik vorgenommen zur Bestimmung einer Heißgaszusammensetzung und Heißgastemperatur mittels des von Gordon & McBride erstellten Programms CEA.

Weiter wurde eine thermische 3D-Fluid-Struktur-Interaktionsanalyse (FSI) mittels des kommerziellen Programmpakets ANSYS / CFX vorgenommen. Es wurde eine 3D-Computational Fluid Dynamics (CFD)-Analyse der vom Reaktionskinetik-Aspekt her "eingefrorenen", d.h. als nicht mehr reaktiv angenommenen Heißgasströmung vorgenommen. Dabei wurde ein kosteneffizienter 3D-Druck der Brennkammer inklusive zylinderförmigem Brennkammerabschnitt, konvergentem Abschnitt der Düse, Düsenhals und divergentem Abschnitt der Düse angenommen. Weiter erfolgte eine thermische 3D-Finite-Element-Analyse der Wärmeleitung im Wandmaterial, CuCrZr. Die thermische Finite-Element-Analyse wurde hierbei mit Materialparametern von konventionell hergestelltem CuCrZr durchgeführt. Lediglich die, für die o.g. CFD-Analyse benötigte, Wandrauheit wurde auf die des SLM-hergestellten Materials angepasst. Weiter wurde eine 3D-CFD-Analyse der H₂-Kühlmittelströmung, ebenfalls unter Anpassung der Oberflächenrauheit auf 3D-Druck, vorgenommen.

Für die 1D-Reaktionskinetik-Analyse sowie die nachfolgende über die Heißgaszusammensetzung an die 1D-Analyse gekoppelte thermische 3D-FSI-Analyse wurden die folgenden Randbedingungen angenommen: Treibstoffkombination: flüssiger Sauerstoff LOX und kryogener, überkritischer Wasserstoff H₂; Mischungsverhältnis (Ratio of Oxidizer and Fuel): ROF = 6,0; Brennkammerdruck: p_{cc} = 4,5 MPa; Ausgangsdruck des Kühlmittels (GH₂) aus dem Kühlkanal: pₑₓᵢₜ = 6,5 MPa; Eingangstemperatur des Kühlmittels (kryogenes, überkritisches H₂) in den Kühlkanal: Tᵢₙ = 30 K.

Unter der Annahme eines spezifischen Impulses von I_{SP} = 446 s, dessen Erreichen die zusätzliche Verwendung einer Düsenerweiterung erfordert, ergibt sich ein mit dieser Brennkammer erreichbarer Schub von F = 4 kN.

Als exemplarisches Resultat der Simulationen ist in Figur 4 die heißgasseitige Wandtemperatur T 64 in K in Abhängigkeit der axialen Richtung 70 (wie in den Figuren 1 und 2 definiert) als Axialkoordinate A in mm dargestellt. Es ist in dem Simulationsmodell eine Injektorkopf-Stirnplattenposition bei x = -225 mm, eine Düsenhalsposition bei x = 0 mm, sowie eine Position des Übergangs zur Düsenerweiterung bei x = 30 mm angenommen. In dem Diagramm ist auch der innere Radius 62 der Brennkammer als Radialkoordinate in mm in Abhängigkeit von der Axialkoordinate x in mm der Triebwerkskomponente angegeben.

Unter den genannten Geometrieparametern, der genannten Treibstoffauswahl und den genannten Randbedingungen beträgt die als Resultat der gekoppelten numerischen Analysen erhaltene, und somit voraussichtlich durch das in den Figuren 1 bis 3 dargestellte optimierte Kühldesign erreichbare maximale Wandtemperatur trotz einer höheren Rauheit des additiv gefertigten SLM-CuCrZr weniger als 600 K.

Diese, für heißgasbeaufschlagte Raketenschubkammerkomponenten sehr niedrige, Wandtemperatur wird somit voraussichtlich lediglich im ersten Belastungszyklus zu einer minimalen elasto-plastischen Deformation der Brennkammerwand und danach zu einem "elastic shakedown" führen, d.h. zu einer permanent elastischen Materialdeformation voraussichtlich bereits ab dem zweiten Belastungszyklus übergehen. Daher ist selbst bei gegenüber konventionell hergestelltem CuCrZr reduzierten SLM-CuCrZr-Materialparametern voraussichtlich eine Lebensdauer im sogenannten High Cycle Fatigue (HCF)-Bereich zu erwarten.

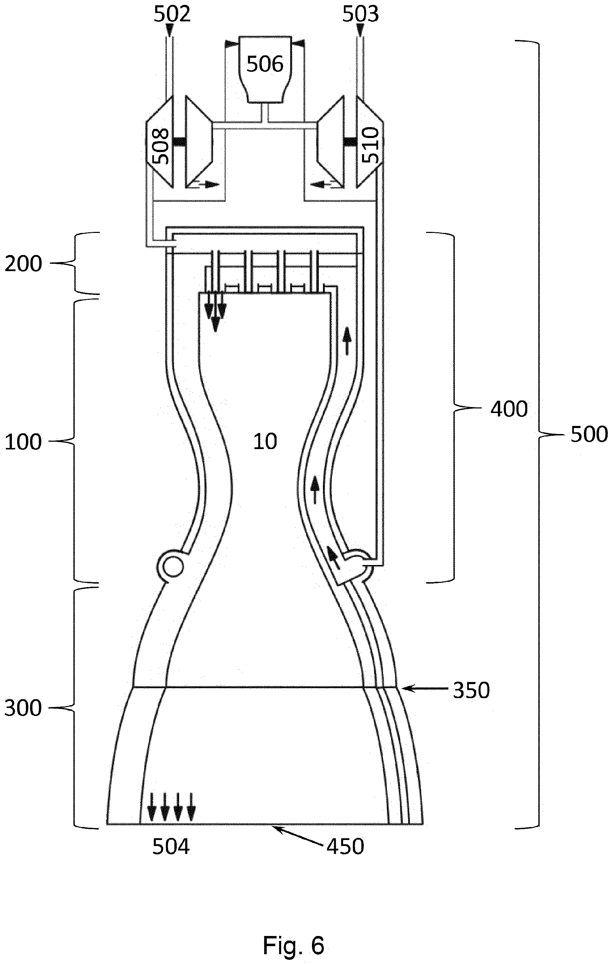

In Figur 5 und Figur 6 ist jeweils exemplarisch ein Gasgenerator-Raketentriebwerk 500 schematisch dargestellt, dass ein Ausführungsbeispiel der Triebwerkskomponente 100 beinhaltet. Dieses Gasgenerator-Raketentriebwerk 500 enthält zusätzlich zu der bereits in den Figuren 1 bis 4 beschriebenen Triebwerkskomponente 100 auch noch zusätzlich einen Gasgenerator 506, eine Oxidatorturbopumpe 508 sowie eine Brennstoffturbopumpe 510. Der Treibstoff wird als Fluidstrom in Form des Oxidatorfluidstroms 502 und des Brennstofffluidstroms 503 zugeführt und verlässt das Triebwerk 500 als Verbrennungsgasstrom 504. Die Triebwerkskomponente 100 mit der düsenförmigen Brennkammer 10 weist ausgangsseitig eine Düsenerweiterung 300 auf, aus der der Verbrennungsgasstrom 504 austritt. Die Pumpen 508 und 510 sind eingangsseitig an einem Injektorkopf 200 der Triebwerkskomponente 100 angeordnet. Injektorkopf 200, Triebwerkskomponente 100 und Düsenerweiterung 300 bilden die Raketenschubkammer 400.

Prinzipiell kann die erfindungsgemäße Triebwerkskomponente als Raketenschubkammer in Raketentriebwerken 500 beliebiger Größe eingesetzt werden, sofern eine Herstellungstechnologie für die gewählte Größe existiert. Je nach erforderlichem Druck von Oxidatorfluid und Brennstofffluid sowie des Oxidatortankdrucks und des Brennstofftankdrucks kann eine Pumpenstufe mit Oxidatorturbopumpe 508 und Brennstoffturbopumpe 510 sowie Gasgenerator 506 vorgesehen sein oder nicht.

In Figur 6 ist zusätzlich zu Figur 5 ein zweiter Düsenerweiterungsabschnitt dargestellt, der zusammen mit dem ersten (bereits in Figur 5 gezeigten) Düsenerweiterungsabschnitt eine Dual-Bell-Düsenerweiterung darstellt.

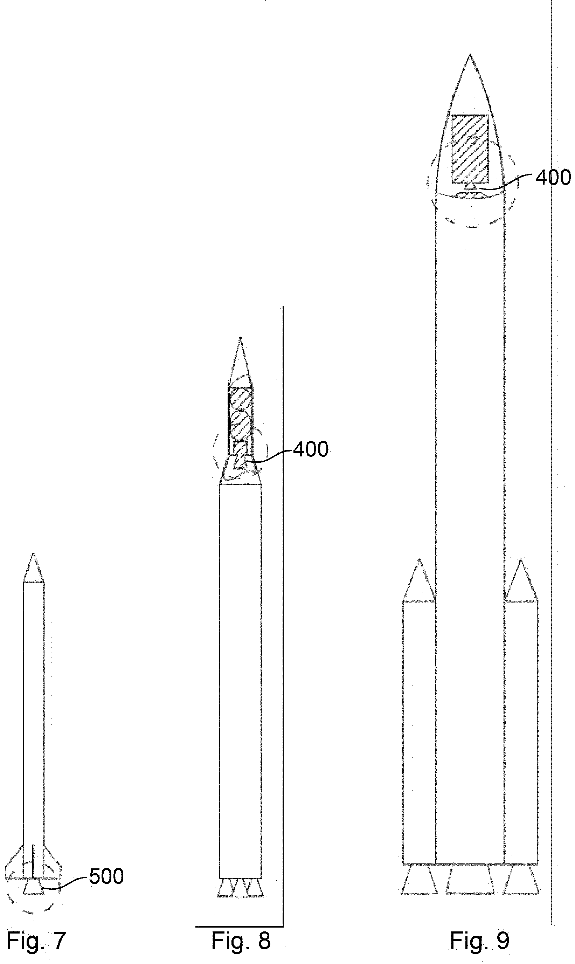

Die in dem Ausführungsbeispiel beschriebenen Größenangaben stellen eine Grundlage für das finale Design kleiner, beispielsweise durch selektives Laserschmelzen hergestellter Raketentriebwerke 500 dar, wie z.B. Haupttriebwerke von Höhenforschungsraketen (Figur 7), Oberstufentriebwerke für sogenannte Microlauncher, also Raketen für kleinere Nutzlasten (Figur 8), Apogäumstriebwerke für sehr große Satelliten (Figur 9), Lageregelungstriebwerke für Raketen für sehr hohe Nutzlast (Figur 9).

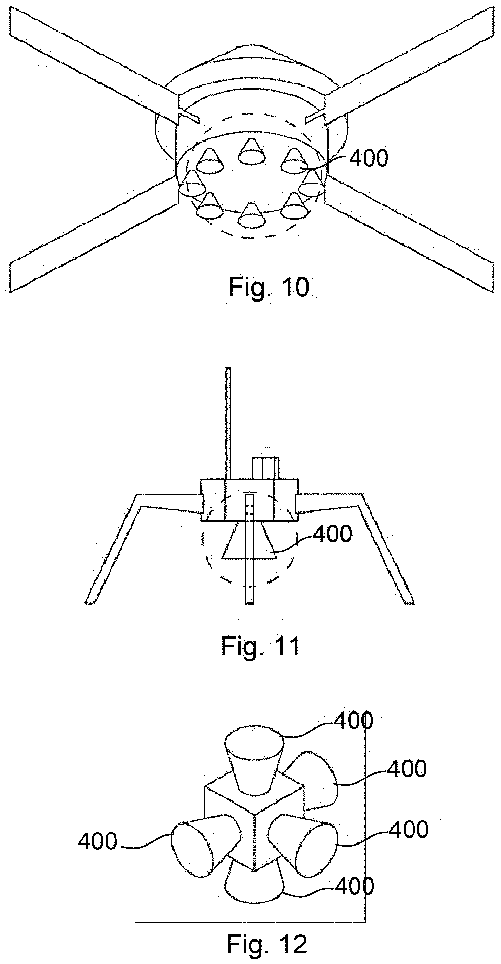

Bei Verwendung einer lagerfähigen Treibstoffkombination anstatt der in der numerischen Analyse angenommenen Treibstoffkombination aus kryogenem LOX (Flüssigsauerstoff) und kryogenem, überkritischem H₂ sind Einsätze der Triebwerkskomponente auch beispielsweise möglich für Lageregelungstriebwerke für wiederverwendbare Orbiter (Figur 12), kleine, so genannte in-Space-Triebwerke für eine Raumflugkapsel, beispielsweise für bemannte Raumflüge (Figur 10), bei Verwendung eines drosselbaren Einspritzkopfes auch als kleines Landungstriebwerk eines Landesystems (Figur 11).

### Bezugszeichen

- 10: Brennkammer
- 12: erste Wand
- 14: zweite Wand
- 16: Wandligament
- 20: erster Kühlungsbereich
- 22: zweiter Kühlungsbereich
- 24: dritter Kühlungsbereich
- 26: Strömungskanal
- 30: Turbulenzerzeuger
- 40: Wand-zu-Wand-Pin-Fin
- 42: Abstand
- 44: Höhe
- 46: Querschnitt
- 48: Durchmesser
- 50: Düse
- 52: Düsenhals
- 56: konvergenter Abschnitt
- 58: divergenter Abschnitt
- 60: zylindrischer Abschnitt
- 62: Radius
- 64: Wandtemperatur
- 70: axiale Richtung
- 72: Strömungsrichtung Fluid
- 74: Strömungsrichtung Verbrennungsgas
- 76: Umfangsrichtung
- 100: Triebwerkskomponente
- 200: Injektorkopf
- 300: Düsenerweiterung
- 350: Transitionsbereich einer Dual-Bell-Düsenerweiterung
- 400: Raketenschubkammer
- 450: Heißgas-Austrittsebene des Raketentriebwerks
- 500: Gasgenerator-Raketentriebwerk
- 502: Oxidator-Fluidstrom
- 503: Brennstoff-Fluidstrom
- 504: Verbrennungsgasstrom
- 506: Gasgenerator
- 508: Oxidator-Turbopumpe
- 510: Brennstoff-Turbopumpe

## Patentansprüche

1. Triebwerkskomponente (100), insbesondere Raketenschubkammerwandkomponente und/oder Düsenerweiterungskomponente für eine Raketenschubkammer (400) und/oder für eine Düsenerweiterung eines Raketentriebwerks (500), umfassend eine doppelwandige Brennkammer (10, 100) und/oder eine doppelwandige Düsenerweiterung (300), die in Strömungsrichtung (74) eines Verbrennungsgases durch einen divergenten Abschnitt (58) einer Düse (50) und/oder eine Austrittsebene (450) des Raketentriebwerks (500) begrenzt ist, und die eine innere erste Wand (12) und eine äußere zweite Wand (14) aufweist,
wobei wenigstens in einem ersten Abschnitt (56) in einer axialen Richtung (70) zwischen der ersten Wand (12) und der zweiten Wand (14) wenigstens ein erster Kühlungsbereich (20) zur Durchströmung mit einem Kühlmittel vorgesehen ist,
in dem ersten Kühlungsbereich (20) Turbulenzerzeuger (30) zur Erzeugung von Turbulenzen im strömenden Kühlmittel zur erhöhten konvektiven Wärmeabfuhr vorgesehen sind, welche zumindest mit der ersten Wand (12) und/oder mit der zweiten Wand (14) und/oder mit Verbindungselementen zwischen der ersten Wand (12) und der zweiten Wand (14) fest verbunden sind, und
in einem zweiten Abschnitt (60) in Strömungsrichtung (74) des Verbrennungsgases vor dem ersten Kühlungsbereich (20) wenigstens ein zweiter Kühlungsbereich (22) und/oder in einem dritten Abschnitt (58) in der Strömungsrichtung (74) des Verbrennungsgases nach dem ersten Kühlungsbereich (20) wenigstens ein dritter Kühlungsbereich (24) vorgesehen ist, welcher zweite und/oder dritte Kühlungsbereich (22, 24) Strömungskanäle (26) aufweist, welche wenigstens mit der ersten Wand (12) in thermischer Verbindung stehen **dadurch gekennzeichnet, dass**
die Turbulenzerzeuger (30) als Pin-Fins (40) mit bolzenähnlicher Struktur ausgebildet sind.

2. Triebwerkskomponente nach Anspruch 1, wobei die Turbulenzerzeuger (30) in dem ersten Kühlungsbereich (20) Wand-zu-Wand-Pin-Fins und/oder frei endende Pin-Fins umfassen.

3. Triebwerkskomponente nach Anspruch 1 oder 2, wobei in den Strömungskanälen (26) wenigstens bereichsweise zusätzliche Turbulenzerzeuger (30) angeordnet sind, die frei endende Turbulenzerzeuger und/oder Wand-zu-Wand-Turbulenzerzeuger umfassen.

4. Triebwerkskomponente nach einem der vorhergehenden Ansprüche, wobei die Strömungskanäle (26) so ausgelegt sind, dass ein strömungslängenbezogener Druckverlust des Kühlmittels in den Strömungskanälen (26) im zweiten und/oder dritten Kühlungsbereich (22, 24) deutlich geringer ist als im ersten Kühlungsbereich (20) mit Turbulenzerzeugern (30).

5. Triebwerkskomponente nach einem der vorhergehenden Ansprüche, wobei der erste Kühlungsbereich (20) in einem oder in mehreren Abschnitten (54) mit hoher thermischer Belastung in einem in Strömungsrichtung (74) des Verbrennungsgases konvergenten Abschnitt (56) der Düse (50) und/oder einem Düsenhals (52) und/oder einem Transitionsbereich einer Zweiglockendüse (350) eines Raketentriebwerks (500) angeordnet ist.

6. Triebwerkskomponente nach einem der vorhergehenden Ansprüche, wobei die Strömungskanäle (26) in einem zylinderförmigen Abschnitt (60) und/oder einem in Strömungsrichtung (74) eines Verbrennungsgases divergenten Abschnitt (58) der Düse (50) angeordnet sind.

7. Triebwerkskomponente nach einem der vorhergehenden Ansprüche, wobei die in axialer Richtung (70) aufeinanderfolgenden Turbulenzerzeuger (30) in einer Umfangsrichtung (76) jeweils an derselben Winkelposition angeordnet sind.

8. Triebwerkskomponente nach einem der Ansprüche 1 bis 6, wobei ein in axialer Richtung (70) folgender Turbulenzerzeuger (30) in Umfangsrichtung (76) jeweils winkelmittig zu jeweils zwei in axialer Richtung (70) davor oder dahinter liegenden Turbulenzerzeugern (30) angeordnet ist.

9. Triebwerkskomponente nach einem der vorhergehenden Ansprüche, wobei eine Anzahl von Turbulenzerzeugern (30) in Querschnitten des Kühlungsbereichs (20), die in axialer Richtung (70) aufeinander folgen, entweder einem ganzzahligen Verhältnis ungleich 1:1 entspricht, oder die Anzahl von Turbulenzerzeugern (30) in Querschnitten, die in axialer Richtung (70) aufeinander folgen, identisch ist.

10. Triebwerkskomponente nach einem der vorhergehenden Ansprüche, wobei ein Abstand (42) zwischen benachbarten Turbulenzerzeugern (30) in Bereichen mit einer höheren Thermalbelastung der ersten Wand (12) in bestimmungsgemäßem Betrieb kleiner als ist als der Abstand zwischen benachbarten Turbulenzerzeugern mit einer niedrigeren Thermalbelastung der ersten Wand (12) in bestimmungsgemäßem Betrieb.

11. Triebwerkskomponente nach einem der vorhergehenden Ansprüche, wobei die Höhe (44) der Turbulenzerzeuger (30) variierend ausgebildet ist.

12. Triebwerkskomponente nach einem der vorhergehenden Ansprüche, wobei die Turbulenzerzeuger (30) einen mit einem Radius (62) der Brennkammer (10) variierenden Abstand (42) aufweisen.

13. Triebwerkskomponente nach einem der vorhergehenden Ansprüche, wobei heißgasseitige Wandligamente (16) zwischen den Turbulenzerzeugern (30) eine mit dem Radius (62) der Brennkammer (10) variierende Wandstärke aufweisen.

14. Triebwerkskomponente nach einem der vorhergehenden Ansprüche, wobei die Turbulenzerzeuger (30) einen mit dem Radius (62) der Brennkammer (10) variierenden Durchmesser (48) aufweisen.

15. Triebwerkskomponente nach einem der vorhergehenden Ansprüche, wobei die Turbulenzerzeuger (30) einen Querschnitt (46) umfassend einen Freiformquerschnitt und/oder einen kreisförmigen Querschnitt und/oder einen ellipsenförmigen Querschnitt und/oder einen polygonförmigen Querschnitt und/oder einen rechteckförmigen Querschnitts und/oder einen quadratischen Querschnitt aufweisen.

16. Triebwerkskomponente nach einem der vorhergehenden Ansprüche, wobei die Turbulenzerzeuger (30) einen über die Höhe (44) der Turbulenzerzeuger (30) veränderlichen Querschnitt (46) aufweisen.

17. Triebwerkskomponente nach einem der vorhergehenden Ansprüche, wobei diese einstückig ausgebildet ist, und/oder wobei diese mittels eines additiven Fertigungsverfahrens gefertigt ist.

18. Raketentriebwerk (500), umfassend wenigstens eine Raketenschubkammer (400) mit einer Triebwerkskomponente nach einem der vorhergehende Ansprüche und/oder eine Düsenerweiterung (300) mit einer Triebwerkskomponente nach einem der vorhergehenden Ansprüche.

19. Verfahren zur Herstellung einer Triebwerkskomponente (100) nach einem der Ansprüche 1 bis 17, insbesondere einer Raketenschubkammerwandkomponente und/oder einer Düsenerweiterungskomponente für eine Raketenschubkammer (400) und/oder für eine Düsenerweiterung eines Raketentriebwerks (500) nach Anspruch 18, mit einer doppelwandigen Brennkammer (10, 100) und/oder einer doppelwandigen Düsenerweiterung (300), die in Strömungsrichtung (74) eines Verbrennungsgases durch einen divergenten Abschnitt (58) einer Düse (50) und/der eine Austrittsebene (450) des Raketentriebwerks (500) begrenzt ist, und die eine erste Wand (12) und eine zweite Wand (14) aufweist, wobei zwischen der ersten Wand (12) und der zweiten Wand (14) wenigstens ein erster Kühlungsbereich (20) zur Durchströmung mit einem Kühlmittel vorgesehen ist,
wobei in dem ersten Kühlungsbereich (20) Turbulenzerzeuger (30) angeordnet werden, welche zumindest mit der ersten Wand (12) und der zweiten Wand (14) und/oder mit Verbindungselementen zwischen der ersten Wand (12) und der zweiten Wand (14) fest verbunden sind und welche im strömenden Kühlmittel Turbulenzen zur erhöhten konvektiven Wärmeabfuhr erzeugen, und
in der Triebwerkskomponente (100) in Strömungsrichtung (74) des Verbrennungsgases vor dem ersten Kühlungsbereich (20) ein zweiter Kühlungsbereich (22) und/oder nach dem ersten Kühlungsbereich (20) ein dritter Kühlungsbereich (24) vorgesehen ist, welcher zweite und/oder dritte Kühlungsbereich (22, 24) Strömungskanäle (26) aufweist,
**dadurch gekennzeichnet, dass**
die Turbulenzerzeuger (30), insbesondere in einem additiven Fertigungsverfahren, als Pin-Fins (40) mit bolzenähnlicher Struktur ausgebildet werden.

## Claims

1. Rocket component (100), in particular rocket thrust chamber wall component and/or nozzle extension component for a rocket thrust chamber (400) and/or for a nozzle extension of a rocket engine (500), comprising a double-walled combustion chamber (10, 100) and/or a double-walled nozzle extension (300) which is delimited in the flow direction (74) of a combustion gas by a divergent portion (58) of a nozzle (50) and/or an outlet plane (450) of the rocket engine (500), and which has an inner first wall (12) and an outer second wall (14),
at least one first cooling region (20) for flowing through with a coolant being provided at least in a first portion (56) in an axial direction (70) between the first wall (12) and the second wall (14),
turbulence generators (30) being provided in the first cooling region (20) for generating turbulences in the flowing coolant for increased convective heat dissipation, which turbulence generators (30) are connected fixedly at least to the first wall (12) and/or to the second wall (14) and/or to connecting elements between the first wall (12) and the second wall (14), and at least one second cooling region (22) being provided in a second portion (60) upstream of the first cooling region (20) in the flow direction (74) of the combustion gas, and/or at least one third cooling region (24) being provided in a third portion (58) downstream of the first cooling region (20) in the flow direction (74) of the combustion gas, which second and/or third cooling region (22, 24) have/has flow ducts (26) which are thermally connected at least to the first wall (12),
**characterized in that**
the turbulence generators (30) are configured as pin fins (40) with a pin-like structure.

2. Engine component according to Claim 1, the turbulence generators (30) in the first cooling region (20) comprising wall-to-wall pin fins and/or freely ending pin fins.

3. Engine component according to Claim 1 or 2, additional turbulence generators (30) which comprise freely ending turbulence generators and/or wall-to-wall turbulence generators being arranged in the flow ducts (26) at least in regions.

4. Engine component according to one of the preceding claims, the flow ducts (26) being designed in such a way that a pressure loss, in relation to the flow length, of the coolant in the flow ducts (26) is considerably lower in the second and/or third cooling region (22, 24) than in the first cooling region (20) with turbulence generators (30).

5. Engine component according to one of the preceding claims, the first cooling region (20) being arranged in one or in a plurality of portions (54) with high thermal loading in a portion (56), convergent in the flow direction (74) of the combustion gas, of the nozzle (50) and/or a nozzle neck (52) and/or a transition region of a dual-bell nozzle (350) of a rocket engine (500).

6. Engine component according to one of the preceding claims, the flow ducts (26) being arranged in a cylindrical portion (60) and/or a portion (58), divergent in the flow direction (74) of a combustion gas, of the nozzle (50).

7. Engine component according to one of the preceding claims, the turbulence generators (30) which follow one another in the axial direction (70) being arranged in the circumferential direction (76) in each case at the same angular position.

8. Engine component according to one of Claims 1 to 6, a turbulence generator (30) which follows in the axial direction (70) being arranged in the circumferential direction (76) in each case so as to bisect the angle of in each case two turbulence generators (30) which lie upstream or downstream in the axial direction (70).

9. Engine component according to one of the preceding claims, a number of turbulence generators (30) in cross sections of the cooling region (20) which follow one another in the axial direction (70) either corresponding to an integral ratio which is not equal to 1:1, or the number of turbulence generators (30) in cross sections which follow one another in the axial direction (70) being identical.

10. Engine component according to one of the preceding claims, a spacing (42) between adjacent turbulence generators (30) in regions with higher thermal loading of the first wall (12) in proper operation being smaller than the spacing between adjacent turbulence generators with lower thermal loading of the first wall (12) in proper operation.

11. Engine component according to one of the preceding claims, the height (44) of the turbulence generators (30) being of varying configuration.

12. Engine component according to one of the preceding claims, the turbulence generators (30) being at a spacing (42) which varies with a radius (62) of the combustion chamber (10).

13. Engine component according to one of the preceding claims, hot-gas-side wall ligaments (16) between the turbulence generators (30) having a wall thickness which varies with the radius (62) of the combustion chamber (10) .

14. Engine component according to one of the preceding claims, the turbulence generators (30) having a diameter (48) which varies with the radius (62) of the combustion chamber (10).

15. Engine component according to one of the preceding claims, the turbulence generators (30) having a cross section (46) comprising a free-form cross section and/or a circular cross section and/or an elliptical cross section and/or a polygonal cross section and/or a rectangular cross section and/or a square cross section.

16. Engine component according to one of the preceding claims, the turbulence generators (30) having a cross section (46) which varies over the height (44) of the turbulence generators (30).

17. Engine component according to one of the preceding claims, it being configured in one piece, and/or it being manufactured by means of an additive manufacturing method.

18. Rocket engine (500), comprising at least one rocket thrust chamber (400) with an engine component according to one of the preceding claims, and/or a nozzle extension (300) with an engine component according to one of the preceding claims.

19. Method for producing engine component (100) according to one of Claims 1 to 17, in particular a rocket thrust chamber wall component and/or a nozzle extension component for a rocket thrust chamber (400) and/or for a nozzle extension of a rocket engine (500) according to Claim 18, with a double-walled combustion chamber (10, 100) and/or a double-walled nozzle extension (300) which is delimited in the flow direction (74) of a combustion gas by a diverging portion (58) of a nozzle (50) and/or an outlet plane (450) of the rocket engine (500), and which has a first wall (12) and a second wall (14), at least one first cooling region (20) for flowing through with a coolant being provided between the first wall (12) and the second wall (14),
turbulence generators (30) being arranged in the first cooling region (20), which turbulence generators (30) are connected fixedly at least to the first wall (12) and the second wall (14) and/or to connecting elements between the first wall (12) and the second wall (14), and which generate turbulences in the flowing coolant for increased convective heat dissipation, and
a second cooling region (22) being provided in the engine component (100) upstream of the first cooling region (20) in the flow direction (74) of the combustion gas, and/or a third cooling region (24) being provided downstream of the first cooling region (20), which second and/or third cooling region (22, 24) have/has flow ducts (26),
**characterized in that**
the turbulence generators (30) are configured, in particular in an additive manufacturing method, as pin fins (40) with a pin-like structure.

## Revendications

1. Composant de moteur (100), en particulier composant de paroi de chambre de poussée de fusée et/ou composant d'extension de tuyère pour une chambre (400) de poussée de fusée et/ou pour une extension de tuyère d'un moteur-fusée (500), comprenant une chambre de combustion (10, 100) à double paroi et/ou une extension de tuyère (300) à double paroi, qui est limitée dans la direction d'écoulement (74) d'un gaz de combustion par une section divergente (58) d'une tuyère (50) et/ou un plan de sortie (450) du moteur-fusée (500), et qui présente une première paroi intérieure (12) et une deuxième paroi extérieure (14),
au moins une première zone de refroidissement (20) destinée à être traversée par un agent de refroidissement étant prévue au moins dans une première section (56) dans une direction axiale (70) entre la première paroi (12) et la deuxième paroi (14),
dans la première zone de refroidissement (20), il est prévu des générateurs de turbulences (30) pour générer des turbulences dans l'agent de refroidissement en circulation afin d'augmenter la dissipation thermique par convection, lesquels sont reliés de manière fixe au moins à la première paroi (12) et/ou à la deuxième paroi (14) et/ou à des éléments de liaison situés entre la première paroi (12) et la deuxième paroi (14), et
dans une deuxième section (60), dans la direction d'écoulement (74) du gaz de combustion, avant la première zone de refroidissement (20), il est prévu au moins une deuxième zone de refroidissement (22) et/ou dans une troisième section (58), dans la direction d'écoulement (74) du gaz de combustion, après la première zone de refroidissement (20), au moins une troisième zone de refroidissement (24), lesquelles deuxième et/ou troisième zones de refroidissement (22, 24) présentent des canaux d'écoulement (26) qui sont en liaison thermique au moins avec la première paroi (12),
**caractérisé en ce que**
les générateurs de turbulences (30) sont conçus sous la forme de plots profilés (40) (« Pin-Fins » en allemand) avec une structure semblable à une forme de boulon.

2. Composant de moteur selon la revendication 1, dans lequel les générateurs de turbulences (30) dans la première zone de refroidissement (20) comprennent des Pin-Fins de paroi à paroi et/ou des Pin-Fins à extrémité libre.

3. Composant de moteur selon la revendication 1 ou la revendication 2, dans lequel des générateurs de turbulences (30) supplémentaires sont agencés au moins par zones dans les canaux d'écoulement (26), lesquels comprennent des générateurs de turbulences à extrémité libre et/ou des générateurs de turbulences de paroi à paroi.

4. Composant de moteur selon l'une des revendications précédentes, dans lequel les canaux d'écoulement (26) sont conçus de telle sorte qu'une perte de pression du fluide de refroidissement liée à la longueur d'écoulement dans les canaux d'écoulement (26) dans la deuxième et/ou la troisième zone de refroidissement (22, 24) est nettement plus faible que dans la première zone de refroidissement (20) avec des générateurs de turbulences (30) .

5. Composant de moteur selon l'une des revendications précédentes, dans lequel la première zone de refroidissement (20) est agencée dans une ou plusieurs sections (54) à forte charge thermique dans une section (56) convergente dans la direction d'écoulement (74) du gaz de combustion de la tuyère (50) et/ou un col de tuyère (52) et/ou une zone de transition d'une tuyère à deux lobes (350) d'un moteur-fusée (500).

6. Composant de moteur selon l'une des revendications précédentes, dans lequel les canaux d'écoulement (26) sont agencés dans une portion cylindrique (60) et/ou une portion (58) de la tuyère (50) divergente dans la direction d'écoulement (74) d'un gaz de combustion.

7. Composant de moteur selon l'une des revendications précédentes, dans lequel les générateurs de turbulences (30) successifs dans la direction axiale (70) sont agencés chacun dans une même position angulaire dans une direction circonférentielle (76).

8. Composant de moteur selon l'une des revendications 1 à 6, dans lequel un générateur de turbulences (30) suivant dans la direction axiale (70) est agencé dans la direction périphérique (76) respectivement au centre de l'angle par rapport à deux générateurs de turbulences (30) situés respectivement avant ou après dans la direction axiale (70).

9. Composant de moteur selon l'une des revendications précédentes, dans lequel un nombre de générateurs de turbulences (30) dans des sections transversales de la zone de refroidissement (20) qui se suivent dans la direction axiale (70) correspond soit à un rapport entier différent de 1:1, soit le nombre de générateurs de turbulences (30) dans des sections transversales qui se suivent dans la direction axiale (70) est identique.

10. Composant de moteur selon l'une des revendications précédentes, dans lequel une distance (42) entre des générateurs de turbulences (30) adjacents dans des zones présentant une charge thermique plus élevée sur la première paroi (12) en fonctionnement conforme est inférieure à la distance entre des générateurs de turbulences adjacents présentant une charge thermique plus faible sur la première paroi (12) en fonctionnement conforme.

11. Composant de moteur selon l'une des revendications précédentes, dans lequel la hauteur (44) des générateurs de turbulences (30) est conçue de manière variable.

12. Composant de moteur selon l'une des revendications précédentes, dans lequel les générateurs de turbulences (30) présentant un écartement (42) qui varie avec un rayon (62) de la chambre de combustion (10).

13. Composant de moteur selon l'une des revendications précédentes, dans lequel des ligaments de paroi (16) côté gaz chaud entre les générateurs de turbulences (30) présentent une épaisseur de paroi qui varie avec le rayon (62) de la chambre de combustion (10).

14. Composant de moteur selon l'une des revendications précédentes, dans lequel les générateurs de turbulences (30) présentent un diamètre (48) qui varie avec le rayon (62) de la chambre de combustion (10).

15. Composant de moteur selon l'une des revendications précédentes, dans lequel les générateurs de turbulences (30) présentent une section transversale (46) comprenant une section transversale de forme libre et/ou une section transversale circulaire et/ou une section transversale elliptique et/ou une section transversale polygonale et/ou une section transversale rectangulaire et/ou une section transversale carrée.

16. Composant de moteur selon l'une des revendications précédentes, dans lequel les générateurs de turbulences (30) présentent une section transversale (46) variable sur la hauteur (44) des générateurs de turbulences (30).

17. Composant de moteur selon l'une des revendications précédentes, dans lequel celui-ci est réalisé d'un seul tenant, et/ou celui-ci est fabriqué par un procédé de fabrication additive.

18. Moteur-fusée (500), comprenant au moins une chambre (400) de poussée de fusée avec un composant de moteur selon l'une des revendications précédentes et/ou une extension de tuyère (300) avec un composant de moteur selon l'une des revendications précédentes.

19. Procédé de fabrication d'un composant de moteur (100) selon l'une des revendications 1 à 17, notamment d'un composant de paroi de chambre de poussée de fusée et/ou d'un composant d'extension de tuyère pour une chambre (400) de poussée de fusée et/ou pour une extension de tuyère d'un moteur-fusée (500) selon la revendication 18, comprenant une chambre de combustion (10, 100) à double paroi et/ou une extension de tuyère (300) à double paroi, qui est limitée dans la direction d'écoulement (74) d'un gaz de combustion par une section divergente (58) d'une tuyère (50) et/ou un plan de sortie (450) du moteur-fusée (500), et qui présente une première paroi (12) et une deuxième paroi (14), au moins une première zone de refroidissement (20) étant prévue entre la première paroi (12) et la deuxième paroi (14) pour le passage d'un agent de refroidissement,
des générateurs de turbulences (30) étant agencés dans la première zone de refroidissement (20), lesquels sont reliés de manière fixe au moins à la première paroi (12) et à la deuxième paroi (14) et/ou à des éléments de liaison entre la première paroi (12) et la deuxième paroi (14) et qui génèrent des turbulences dans le fluide de refroidissement en circulation pour une évacuation de chaleur par convection accrue, et
il est prévu dans le composant de moteur (100), dans la direction d'écoulement (74) du gaz de combustion, avant la première zone de refroidissement (20), une deuxième zone de refroidissement (22) et/ou après la première zone de refroidissement (20), une troisième zone de refroidissement (24), laquelle deuxième et/ou troisième zone de refroidissement (22, 24) présente des canaux d'écoulement (26),
**caractérisé en ce que**
les générateurs de turbulences (30) sont réalisés, en particulier par un procédé de fabrication additive, sous forme de plots profilés (40) (« Pin-Fins » en allemand) avec une structure semblable à une forme de boulon.
